(19) Europäisches Patentamt
European Patent Office
Office européen des brevets

(11) **EP 3 002 871 B1**

(12) **EUROPÄISCHE PATENTSCHRIFT**

(45) Veröffentlichungstag und Bekanntmachung des Hinweises auf die Patenterteilung:
**16.01.2019   Patentblatt 2019/03**

(51) Int Cl.:
*H02P 29/66* (2016.01)    *B62D 5/04* (2006.01)
*H02P 23/14* (2006.01)    *H02H 3/08* (2006.01)
*H02H 7/085* (2006.01)

(21) Anmeldenummer: **14464011.7**

(22) Anmeldetag: **30.09.2014**

(54) **Verfahren zum Initialisieren einer Temperaturüberwachung und Steuerungsverfahren für einen Elektromotor**

Method for initialising a temperature monitor and control method for an electric motor

Procédé d'initialisation d'une surveillance de température et procédé de commande pour un moteur électrique

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**06.04.2016   Patentblatt 2016/14**

(73) Patentinhaber: **Continental Automotive GmbH 30165 Hannover (DE)**

(72) Erfinder: **Bogdan, Ciocoiu 700163 Iasi (RO)**

(74) Vertreter: **Brand, Markus et al Continental Teves AG & Co. oHG Patent- und Lizenzabteilung Guerickestrasse 7 60488 Frankfurt am Main (DE)**

(56) Entgegenhaltungen:
EP-A1- 1 286 456    EP-A1- 2 168 842
JP-A- 2001 328 551    JP-A- 2011 109 814

**Beschreibung**

Die Erfindung betrifft ein Verfahren zum Initialisieren einer Temperaturüberwachung für Komponenten eines Elektromotors, wobei die Temperaturüberwachung in einer elektronischen Motorsteuerung implementiert ist. Die Erfindung betrifft des Weiteren ein Steuerungsverfahren für einen Elektromotor, welches in einer elektronischen Motorsteuerung ausgeführt wird.

Elektromotoren können beispielsweise verwendet werden, um in einer elektrischen Servolenkung eines Kraftfahrzeugs eine die Lenkung unterstützende Kraft aufzubringen. Hierfür ist es typischerweise erforderlich, ein sehr genau einstellbares Drehmoment mittels des Elektromotors zu erzeugen, um eine für den Fahrer unerwartete Reaktion der Lenkvorrichtung und unerwünschte Lenkbewegungen zu vermeiden. Typischerweise werden für derartige Anwendungen bürstenlose Elektromotoren verwendet.

Um das Drehmoment eines Elektromotors besonders genau einstellen zu können, ist es typischerweise erforderlich, die Temperaturen einer Mehrzahl von Komponenten dieses Elektromotors zu überwachen. In der Praxis ist es jedoch meistens nicht durchführbar, an allen zu überwachenden Komponenten jeweilige Temperatursensoren anzubringen. Aus diesem Grund wurden Modelle entwickelt, mit deren Hilfe sich die jeweiligen Temperaturen von Komponenten, an welchen kein Temperatursensor angebracht ist, berechnen lassen. Derartige Modelle können beispielsweise auf der Berücksichtigung einer von einem antreibenden Strom abgegebenen Leistung oder auch auf empirisch ermittelten Modellen basieren.

Eine Schwierigkeit bei der Verwendung derartiger Modelle ergibt sich insbesondere daraus, dass Temperaturen von Komponenten, welche keinen Temperatursensor aufweisen, zu Beginn der Berechnung mit einem bestimmten Wert initialisiert werden müssen. Dies ist typischerweise beim Einschalten des Elektromotors bzw. der zugehörigen Electronic Control Unit (ECU) oder Leistungselektronik der Fall. Sofern seit dem letztmaligen Ausschalten eine ausreichend lange Zeit vergangen ist, um ein thermisches Gleichgewicht herzustellen, weisen alle Komponenten des Elektromotors die gleiche Temperatur auf und es kann dementsprechend zur Initialisierung aller Temperaturen auf einen Temperaturwert zurückgegriffen werden, welcher aktuell von einem Temperatursensor gemessen wird. Derartig lange Zeiträume treten jedoch im typischen Betrieb eines Kraftfahrzeugs häufig nicht auf. Es kommt vielmehr immer wieder vor, dass ein Fahrzeug nur für wenige Minuten abgestellt und anschließend wieder in Betrieb genommen wird. Derartige Zeiten reichen typischerweise nicht aus, um ein thermisches Gleichgewicht herzustellen.

Bei bekannten Ausführungen wurde dieses Problem dadurch gelöst, dass nach dem Ausschalten des Elektromotors, insbesondere beim Abstellen des Fahrzeugs unter gleichzeitigem Ausschalten der Zündung, die Temperaturüberwachung für einen bestimmten Zeitraum fortgeführt wird. Mit anderen Worten werden die Temperaturen der temperaturüberwachten Komponenten auf Basis der verwendeten Modelle laufend weiterberechnet, auch wenn das Fahrzeug nicht mehr in Betrieb ist. Sofern das Fahrzeug innerhalb des Zeitraums, in welchem die Temperaturüberwachung fortgeführt wird, wieder in Betrieb genommen wird, werden die berechneten Temperaturen zur Initialisierung der Temperaturüberwachung verwendet. In einem solchen Fall kann beispielsweise auch davon gesprochen werden, dass die Temperaturüberwachung über den Zeitraum, in welchem sich das Fahrzeug nicht in Betrieb befindet, nahtlos fortgeführt wird.

Nach einer vorgegebenen Zeit wird die Temperaturüberwachung beendet. Sofern das Fahrzeug dann wieder in Betrieb genommen wird, wird bei der Initialisierung der Temperaturüberwachung davon ausgegangen, dass ein thermisches Gleichgewicht hergestellt ist, so dass alle Temperaturen mit einem gemessenen Temperaturwert initialisiert werden.

Es hat sich jedoch gezeigt, dass in manchen Fällen die verwendeten Zeiten, in welchen die Temperaturüberwachung fortgeführt wird, nicht ausreichen, um tatsächlich bis zu einem thermischen Gleichgewicht zu gelangen. Wenn das Fahrzeug zu einem Zeitpunkt wieder in Betrieb genommen wird, an welchem ein thermisches Gleichgewicht tatsächlich noch nicht hergestellt ist, die Temperaturüberwachung aber bereits beendet wurde, so werden Temperaturen von Komponenten mit nicht zutreffenden Werten initialisiert. Dies führt dazu, dass der Elektromotor im Betrieb falsche Drehmomente ausgibt, was zu einer unerwarteten Reaktion der Lenkung und zu einer entsprechenden Gefährdung des Fahrzeugs führen kann. Des Weiteren benötigt die Fortführung der Temperaturüberwachung Energie und erfordert auch einen gewissen Aufwand in der Fahrzeugschaltung.

In der EP 1 286 456 A1 wird ein Verfahren zur Temperaturüberwachung bei einem elektrischen Motor offenbart, bei dem die Temperaturmessung an einer temperaturkontrollierten Komponente für die Bestimmung der Temperatur einer temperaturüberwachten Komponente zu einer Ausschaltzeit herangezogen wird. Dabei wird die Zeitdauer zwischen Ausschaltzeit und Einschaltzeit durch eine Näherungsformel berechnet.

Ein weiteres Verfahren zur Temperaturüberwachung bei einem elektrischen Motor wird in der JP 2001 328551 A beschrieben.

Es ist deshalb eine Aufgabe der Erfindung, ein Verfahren zum Initialisieren einer Temperaturüberwachung für Komponenten eines Elektromotors vorzusehen, wobei die Temperaturüberwachung in einer elektronischen Motorsteuerung implementiert ist, welches ohne eine fortgeführte Temperaturüberwachung nach dem Ausschalten des Elektromotors auskommt. Es ist des Weiteren eine Aufgabe der Erfindung, ein Steuerungsverfahren für einen Elektromotor vorzusehen, welches in einer elektronischen Motorsteuerung ausgeführt wird und welches ein solches Verfahren zum Initialisieren einer Temperaturüberwachung ausführt.

Dies wird erfindungsgemäß durch ein Verfahren nach Anspruch 1 erreicht. Vorteilhafte Ausgestaltungen können beispielsweise den jeweiligen Unteransprüchen entnommen werden. Der Inhalt der Ansprüche wird durch ausdrückliche Inbezugnahme zum Inhalt der Beschreibung gemacht. Die Erfindung betrifft, ein Verfahren zum Initialisieren einer Temperaturüberwachung für Komponenten eines Elektromotors, wobei die Temperaturüberwachung in einer elektronischen Motorsteuerung implementiert ist. Das Verfahren weist folgende Schritte auf:

- Ermitteln einer Zeitdauer zwischen einer Ausschaltzeit, welche anzeigend dafür ist, wann der Elektromotor letztmalig ausgeschaltet wurde, und einer Einschaltzeit, welche anzeigend dafür ist, wann der Elektromotor wieder eingeschaltet wird,
- Ermitteln jeweiliger Temperaturen von temperaturkontrollierten Komponenten zur Einschaltzeit mittels an den temperaturkontrollierten Komponenten angebrachten Temperatursensoren,
- Ermitteln jeweiliger Temperaturen oder Temperaturüberhöhungen von temperaturüberwachten Komponenten zur Ausschaltzeit mittels gespeicherter Daten,
- Berechnen jeweiliger Temperaturen der temperaturüberwachten Komponenten zur Einschaltzeit basierend auf deren jeweiligen Temperaturen oder Temperaturüberhöhungen zur Ausschaltzeit, den Temperaturen der temperaturkontrollierten Komponenten zur Einschaltzeit, und/oder der Zeitdauer zwischen Ausschaltzeit und Einschaltzeit.

Mittels des erfindungsgemäßen Verfahrens ist es möglich, Anfangswerte für Temperaturen von temperaturüberwachten Komponenten festzulegen, ohne während einer Zeit, in welcher der Elektromotor nicht in Betrieb ist, die Temperaturüberwachung fortzuführen. Somit kann auf eine fortgeführte Temperaturüberwachung verzichtet werden.

Die elektronische Motorsteuerung kann beispielsweise abgeschaltet werden, wenn der Elektromotor abgeschaltet wird, wobei ein Abschalten des Elektromotors typischerweise bedeutet, dass auch die zugehörige ECU bzw. Leistungselektronik abgeschaltet wird. Dies geht typischerweise damit einher, dass ein Fahrzeug abgestellt und die Zündung ausgeschaltet wird. Die Zeit, zu der dies passiert, kann typischerweise als Ausschaltzeit bezeichnet werden.

Dementsprechend handelt es sich bei der Einschaltzeit typischerweise um diejenige Zeit, zu welcher das Fahrzeug wieder in Betrieb genommen wird, also beispielsweise die Zündung eingeschaltet wird. Dabei wird typischerweise gleichzeitig auch die zugehörige ECU bzw. Leistungselektronik und damit der Elektromotor eingeschaltet. Ab diesem Zeitpunkt soll der Elektromotor wieder zum Unterstützen der Lenkung zur Verfügung stehen, was nicht zwangsläufig bedeutet, dass er sofort ein Drehmoment ausübt.

Unter temperaturkontrollierten Komponenten werden solche Komponenten verstanden, welche einen Temperatursensor aufweisen. Diese Komponenten können also unmittelbar durch einen Sensor überwacht werden. Bei solchen temperaturkontrollierten Komponenten kann es sich beispielsweise um eine Wärmesenke, insbesondere ein Gehäuse der ECU, handeln. Alternativ oder zusätzlich dazu kann es sich beispielsweise auch um ein Motorgehäuse handeln. Die Verwendung dieser Komponenten als temperaturkontrollierte Komponenten hat sich in der Praxis als vorteilhaft erwiesen. Des Weiteren hat es sich als vorteilhaft erwiesen, wenn ein Temperatursensor des Motorgehäuses so nah wie möglich an einer Wicklung des Elektromotors angeordnet ist.

Bei dem Elektromotor kann es sich insbesondere um einen Elektromotor für eine Servolenkung handeln. Bei der Servolenkung kann es sich insbesondere um eine Servolenkung für ein Kraftfahrzeug handeln. Für derartige Einsatzzwecke haben sich insbesondere bürstenlose Motoren als geeignet erwiesen.

Es sei erwähnt, dass das erfindungsgemäße Verfahren bevorzugt so ausgeführt wird, dass alle erwähnten Schritte in der angegebenen Reihenfolge durchgeführt werden. Gemäß einer Ausführung ist vorgesehen, dass keine weiteren als die angegebenen Schritte ausgeführt werden.

Die Temperaturüberwachung dient insbesondere dazu, eine Kompensation der Temperaturen für die Steuerung des Elektromotors zu ermöglichen. Anders ausgedrückt kann die elektronische Motorsteuerung die Temperaturen bei der Berechnung eines Stroms berücksichtigen, welcher durch den Elektromotor zum Erzeugen eines bestimmten Drehmoments fließt. Des Weiteren kann mittels der Temperaturüberwachung auch ein Überhitzungsschutz für die einzelnen Komponenten vorgesehen sein. Beispielsweise kann ein durch den Elektromotor fließender Strom reduziert werden, wenn sich eine Komponente zu überhitzen droht.

Es ist des Weiteren möglich, mittels der Temperaturüberwachung eine Gegenkontrolle zwischen Temperatursensoren vorzusehen. Dies ist insbesondere deshalb möglich, weil eine temperaturüberwachte Komponente, also eine Komponente, deren Temperatur mittels der Temperaturüberwachung berechnet wird, gleichzeitig auch eine temperaturkontrollierte Komponente sein kann. Die Temperatur einer solchen Komponente wird also einerseits berechnet, andererseits auch gemessen. Aus einer möglichen Abweichung zwischen gemessener und berechneter Temperatur kann auf eventuelle Fehlfunktionen, beispielsweise Fehlfunktionen der Temperatursensoren, geschlossen werden.

Unter einer Temperatur wird typischerweise die absolute Temperatur verstanden. Unter einer Temperaturüberhöhung wird typischerweise die Temperatur einer temperaturüberwachten Komponente abzüglich einer Temperatur einer temperaturkontrollierten Komponente verstanden. Dies bedeutet, dass eine Temperaturüberhöhung typischerweise relativ zu einer Referenzkomponente berechnet und angegeben wird. Sie kann auch als Overheat bezeichnet werden. Beispielsweise kann die Temperatur eines Motormagneten, also eines Permanentmagneten, relativ zu einer gemessenen Temperatur eines Motorgehäuses angegeben werden. Beträgt beispielsweise die Temperatur des Motormagneten 60° C und die Temperatur des Motorgehäuses 40° C, so beträgt die Temperaturüberhöhung 20° C.

Ob von einer Komponente die absolute Temperatur oder eine Temperaturüberhöhung betrachtet wird, hängt typischerweise davon ab, mittels welcher Art von Modellen die Temperaturüberwachung dieser Komponente ausgeführt wird. Unterschiedliche Modelle werden weiter unten beschrieben werden.

Es sei verstanden, dass das Verfahren typischerweise derart ausgeführt wird, dass die Zeitdauer zwischen Ausschaltzeit und Einschaltzeit beim Berechnen jeweiliger Temperaturen der temperaturüberwachten Komponenten verwendet wird. Bei Komponenten, welche unter Verwendung von Modellen überwacht werden, die auf einer berechneten Leistungsabgabe basieren, werden typischerweise Temperaturüberhöhungen relativ zu einer temperaturkontrollierten Komponente und die jeweilige Temperaturen der temperaturkontrollierten Komponente betrachtet. Bei Komponenten, deren Temperatur unter Verwendung von empirischen Modellen überwacht werden, wird typischerweise ein Absolutwert der Temperatur betrachtet. In einer typischen Ausführung des Verfahrens werden beide Arten von Modellen verwendet, so dass sowohl Temperaturen wie auch Temperaturüberhöhungen zur Ausschaltzeit ebenso wie Temperaturen der temperaturkontrollierten Komponenten zur Einschaltzeit und ferner auch die Zeitdauer zwischen Ausschaltzeit und Einschaltzeit betrachtet werden.

Beim Initialisieren der Temperaturüberwachung können ferner eine Anzahl von Schritten ausgeführt werden, welche einer möglichen Fehlererkennung dienen. Beispielsweise kann überprüft werden, ob die Zeitdauer zwischen Ausschaltzeit und Einschaltzeit positiv ist. Es kann überprüft werden, dass keine Fehler in einem flüchtigen oder nichtflüchtigen Speicher, beispielsweise einem Electrically Erasable Programmable Read-Only Memory (EEPROM) auftreten. Es kann außerdem überprüft werden, dass das System, wie beispielsweise die Motorsteuerung, beim Ausschalten korrekt heruntergefahren wurde und Werte aktualisiert wurden. Beispielsweise kann überprüft werden, dass zwischenzeitlich keine Trennung von der Batterie erfolgt ist. Sollten derartige Fehler detektiert werden, so kann die Motorsteuerung beispielsweise mit einem Fehler reagieren und die Temperaturmodelle bzw. die Temperaturen und/oder Temperaturüberhöhungen können mit gemessenen Werten initialisiert werden.

Gemäß einer Ausführung werden Temperaturen von Komponenten einer ersten Menge von temperaturüberwachten Komponenten zur Einschaltzeit als Summe einer Temperatur einer temperaturkontrollierten Komponente und einer berechneten Temperaturüberhöhung zur Einschaltzeit berechnet.

Bevorzugt wird dabei jede Temperaturüberhöhung zur Einschaltzeit aus einer jeweiligen Temperaturüberhöhung zur Ausschaltzeit berechnet, indem die Temperaturüberhöhung zur Ausschaltzeit mit einem Zeitkorrekturfaktor multipliziert wird. Der Zeitkorrekturfaktor wird dabei aus einer Exponentialfunktion berechnet, in deren Exponenten ein mit dem Wert -1 multiplizierter Quotient steht. Im Zähler des Quotienten steht dabei die Zeitdauer zwischen Ausschaltzeit und Einschaltzeit. Im Nenner des Quotienten steht eine Zeitkonstante.

Die Zeitkonstante gibt beispielsweise eine typische Zeitdauer an, in welcher sich die Temperatur einer jeweiligen Komponente zu einem gewissen Grad an die Temperatur einer temperaturkontrollierten Komponente anpasst. Mit anderen Worten kann die Zeitkonstante anzeigend dafür sein, wie lange es dauert, bis ein thermisches Gleichgewicht ganz oder zumindest bis zu einem gewissen Grad hergestellt wird. Derartige Zeitkonstanten können beispielsweise experimentell ermittelt werden.

Die Berechnung der jeweiligen Temperatur einer Komponente der ersten Menge von Komponenten zur Einschaltzeit kann beispielsweise in Form einer Formel folgendermaßen dargestellt werden:

$$T_e = T_{k,e} + dT_a * e^{\frac{-t}{T}}$$

Dabei bedeuten:

$T_e$: Temperatur der Komponente zur Einschaltzeit (berechnet),
$T_{k,e}$: Temperatur einer temperaturkontrollierten Komponente zur Einschaltzeit (gemessen),
$dT_a$: Temperaturüberhöhung der temperaturüberwachten Komponente zur Ausschaltzeit (berechnet bzw. gespeichert),
e: Euler'sche Zahl,
t: Zeitdauer zwischen Ausschaltzeit und Einschaltzeit,
T: Zeitkonstante.

Gemäß einer bevorzugten Ausführung werden jeweilige Temperaturen von Komponenten der ersten Menge von temperaturüberwachten Komponenten von der Temperaturüberwachung basierend auf einem Modell berechnet, welches auf berechneten Leistungsverlusten und auf zumindest einer Temperatur einer temperaturkontrollierten Komponente basiert. Hierbei handelt es sich typischerweise um Modelle, welche physikalisch auf einer abgegebenen Leistung basieren. Beispielsweise können hierbei Laplace-Transferfunktionen erster Ordnung verwendet werden. Bei der eben beschriebenen Berechnung jeweiliger Temperaturen von Komponenten der ersten Menge von temperaturüberwachten Komponenten basierend auf einem bestimmten Modell handelt es sich typischerweise um die laufende Berechnung der Temperaturen im kontinuierlichen Betrieb nach erfolgter Initialisierung.

Beispielsweise enthält die erste Menge von temperaturüberwachten Komponenten eine Leistungsendstufe und/oder eine Motorwicklung. Hierbei handelt es sich um Komponenten, in welchen typischerweise hohe Leistungsverluste auftreten und welche sich deshalb für die Anwendung von hierauf basierenden Modellen besonders gut eignen.

Erfindungsgemäß werden Temperaturen von Komponenten einer zweiten Menge von temperaturüberwachten Komponenten zur Einschaltzeit unter Verwendung eines jeweiligen empirischen Modells berechnet.

Jedes Modell zur Berechnung der Temperatur der jeweiligen temperaturüberwachten Komponenten der zweiten Menge weist folgende Eingangsparameter auf:

- die Zeitdauer zwischen Ausschaltzeit und Einschaltzeit,
- eine Zeitkonstante,
- einen Anfangswert, welcher basierend auf zumindest einer Temperatur einer temperaturkontrollierten Komponente zur Einschaltzeit berechnet wird, und
- einen Endwert, welcher basierend auf der Temperatur der temperaturüberwachten Komponente zur Ausschaltzeit berechnet wird.

Die Verwendung solcher Eingangsparameter hat sich als vorteilhaft erwiesen.

Dabei wird die Temperatur der temperaturüberwachten Komponente zur Einschaltzeit folgendermaßen berechnet:

$$(\text{Anfangswert} - \text{Endwert}) * \text{Zeitdauer} / (\text{Zeitdauer} + \text{Zeitkonstante}) + \text{Endwert}$$

Als Formel kann diese Berechnungsvorschrift beispielsweise folgendermaßen ausgedrückt werden:

$$T_e = (A - E) * \frac{t}{t + T} + E$$

Dabei bedeuten:

$T_e$: Temperatur der Komponente zur Einschaltzeit (berechnet),
A: Anfangswert,
E: Endwert,
t: Zeitdauer zwischen Ausschaltzeit und Einschaltzeit,
T: Zeitkonstante.

Gemäß einer typischen Ausführung handelt es sich bei dem Anfangswert um die Temperatur der temperaturkontrollierten Komponente zur Einschaltzeit. Gemäß einer weiteren, insbesondere damit kombinierbaren typischen Ausführung handelt es sich bei dem Endwert um die Temperatur der temperaturüberwachten Komponente zur Ausschaltzeit.

Bevorzugt werden jeweilige Temperaturen von Komponenten der zweiten Menge von temperaturüberwachten Komponenten von der

Temperaturüberwachung basierend auf dem jeweiligen empirischen Modell berechnet, welches für die Berechnung der Temperaturen zur Einschaltzeit verwendet wird. Bei einer solchen Berechnung der jeweiligen Temperaturen wie eben beschrieben handelt es sich insbesondere um die jeweilige Berechnung während eines kontinuierlichen Betriebs nach der Initialisierung.

Bevorzugt enthält die zweite Menge von temperaturüberwachten Komponenten eine oder mehrere der folgenden Komponenten:

- Motorpermanentmagnet,
- Kondensator einer Leistungsendstufe,
- eingangsseitige EMV-Drossel.

Beispielsweise kann die zweite Menge von temperaturüberwachten Komponenten alle drei genannten Komponenten enthalten.

Bei einem Motorpermanentmagneten handelt es sich insbesondere um einen Permanentmagneten in einem Rotor eines bürstenlosen Elektromotors. Bei einer eingangsseitigen EMV-Drossel handelt es sich insbesondere um eine Spule, welche typischerweise zur Verbesserung der elektromagnetischen Verträglichkeit (EMV) eingesetzt wird. Derartige EMV-Drosseln können beispielsweise auch als Stabkerndrosseln bezeichnet werden.

Es sei verstanden, dass ein Elektromotor beispielsweise auch eine Komponente in Form eines PowerFrames aufweisen kann, wobei es sich hierbei typischerweise um Anschlussleitungen handelt. Für diese ist es in manchen Ausführungen nicht notwendig, eine separate Temperaturüberwachung vorzusehen. Ein PowerFrame kann jedoch auch zur ersten oder zweite Menge von temperaturüberwachten Komponenten gehören, so dass seine Temperatur entsprechend wie oben beschrieben initialisiert und überwacht wird.

Bezüglich der Zeitkonstante bei der zweiten Menge von Komponenten gelten typischerweise die gleichen Ausführungen wie oben mit Bezug auf die erste Menge von Komponenten gegeben.

Gemäß einer bevorzugten Ausführung ist bei Verwendung einer Zeitkonstante vorgesehen, dass Temperaturen der temperaturüberwachten Komponenten mit einer gemessenen Temperatur einer temperaturkontrollierten Komponente initialisiert werden, wenn die Zeitdauer zwischen Ausschaltzeit und Einschaltzeit mindestens ein vorgegebenes Vielfaches der Zeitkonstante beträgt. Damit können unnötige Berechnungen vermieden werden, wenn sich das System ohnehin im thermischen Gleichgewicht befindet. Beispielsweise kann für die hierzu notwendige Zeit das Dreifache, Vierfache oder Fünffache der Zeitkonstante angenommen werden.

Die Erfindung betrifft des Weiteren ein Steuerungsverfahren für einen Elektromotor, welches in einer elektronischen Motorsteuerung ausgeführt wird. Das Steuerungsverfahren führt beim Einschalten des Elektromotors ein erfindungsgemäßes Verfahren zum Initialisieren aus. Nach der Ausführung des Verfahrens zum Initialisieren berechnet das Steuerungsverfahren mittels der Temperaturüberwachung laufend die Temperaturen der temperaturüberwachten Komponenten. Vor einem Abschalten des Elektromotors speichert das Steuerungsverfahren die Ausschaltzeit und/oder Temperaturen oder Temperaturüberhöhungen von temperaturüberwachten Komponenten.

Mittels des erfindungsgemäßen Steuerungsverfahrens kann eine besonders vorteilhafte Temperaturüberwachung von temperaturüberwachten Komponenten ermöglicht werden. Dabei kann insbesondere auf das vorteilhafte erfindungsgemäße Verfahren zum Initialisieren zurückgegriffen werden. Hinsichtlich des Verfahrens zum Initialisieren kann auf alle weiter oben beschriebenen Ausführungen und Varianten zurückgegriffen werden. Erläuterte Vorteile gelten entsprechend.

Die Ausschaltzeit und die Einschaltzeit werden erfindungsgemäß aus einem Fahrzeug-Bussystem, wie beispielsweise einem CAN-Bus, oder aus einem internen Zeitgeber der elektronischen Motorsteuerung erhalten. Ein solcher interner Zeitgeber kann beispielsweise in regelmäßigen oder unregelmäßigen Abständen mit einem Fahrzeug-Bussystem synchronisiert werden.

Beispielsweise gibt es eine elektronische Motorsteuerung, insbesondere für einen bürstenlosen Elektromotor einer Servolenkung eines Kraftfahrzeugs, welche programmiert oder konfiguriert ist, ein erfindungsgemäßes Verfahren auszuführen. Hinsichtlich des erfindungsgemäßen Verfahrens kann auf alle weiter oben beschriebenen Ausführungen eines Verfahrens zum Initialisieren oder eines Steuerungsverfahrens für einen Elektromotor zurückgegriffen werden. Erläuterte Vorteile gelten entsprechend.

Die elektronische Motorsteuerung kann beispielsweise in Form eines Mikroprozessors, eines Mikrocontrollers, eines frei programmierbaren Computers, eines Anwendungsspezifischen Integrierten Schaltkreises (ASIC) oder als andere programmierbare oder festverdrahtete Einrichtung ausgeführt sein. Insbesondere kann die elektronische Motorsteuerung Prozessormittel und Speichermittel aufweisen, wobei die Speichermittel Programmcode enthalten, bei dessen Ausführung durch die Prozessormittel ein erfindungsgemäßes Verfahren ausgeführt wird.

Beispielsweise gibt es außerdem ein nichtflüchtiges computerlesbares Speichermedium, auf welchem Programmcode gespeichert ist, bei dessen Ausführung durch einen Prozessor ein erfindungsgemäßes Verfahren ausgeführt wird. Hinsichtlich des Verfahrens kann auf alle weiter oben beschriebenen Ausführungen und Varianten zurückgegriffen werden.

Weitere Merkmale und Vorteile der Erfindung wird der Fachmann aus der nachfolgenden Beschreibung eines Ausführungsbeispiels entnehmen, welches mit Bezug auf die beigefügte Zeichnung gegeben wird.

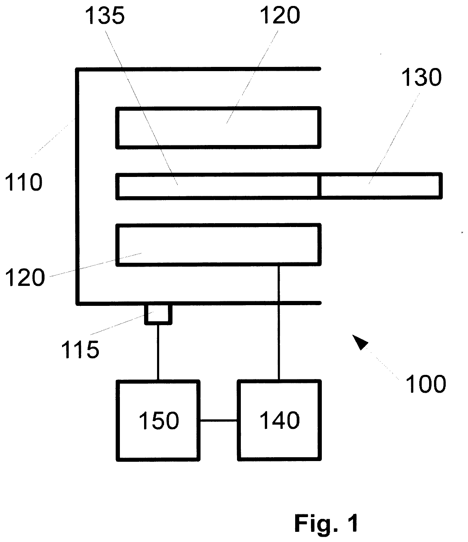

Dabei zeigt Fig. 1 eine schematische Ansicht eines Elektromotors mit einer elektronischen Motorsteuerung, welche ein erfindungsgemäßes Verfahren ausführt.

Fig. 1 zeigt schematisch einen bürstenlosen Elektromotor 100, wie er insbesondere für eine Servolenkung eines Kraftfahrzeugs verwendet werden kann. Der Elektromotor 100 weist ein Motorgehäuse 110 auf, an welchem ein Temperatursensor 115 zur Ermittlung der Temperatur des Motorgehäuses 110 angebracht ist.

Der Elektromotor 100 weist ferner eine Wicklung 120 auf, welche zur Erzeugung eines zeitlich veränderlichen Magnetfelds dient. Außerdem weist der Elektromotor 100 eine Welle 130 auf, welche zum Antrieb einer externen Vorrichtung wie beispielsweise einer Lenkvorrichtung eines Kraftfahrzeugs dienen kann. Ein Teil der Welle 130 ist als Motorpermanentmagnet 135 ausgebildet, wobei sich der Motorpermanentmagnet 135 innerhalb der Wicklung 120 befindet. Dies ermöglicht es, dass die Welle 130 mittels eines durch die Wicklung 120 erzeugten Magnetfelds in Rotation versetzt wird.

Der Elektromotor 100 ist mit einer Leistungsendstufe 140 verbunden, welche einen einstellbaren Strom durch die Wicklung 120 anlegen kann. Hierzu ist die Leistungsendstufe 140 elektrisch mit der Wicklung 120 verbunden.

Des Weiteren ist die Leistungsendstufe 140 mit einer elektronischen Motorsteuerung 150 verbunden. Die elektronische Motorsteuerung 150 weist einen Prozessor sowie einen Speicher auf, wobei in dem Speicher Programmcode gespeichert ist, welcher bei Ausführung durch den Prozessor dafür sorgt, dass der Prozessor die elektronische Motorsteuerung wie nachfolgend beschrieben steuert.

Die elektronische Motorsteuerung 150 ist des Weiteren mit dem Temperatursensor 115 verbunden, um die Temperatur des Motorgehäuses 110 zu erhalten.

Die elektronische Motorsteuerung 150 ist insbesondere dazu ausgebildet, die Leistungsendstufe 140 derart anzusteuern, dass diese einen definierten Strom an die Wicklung 120 anlegt. Dieser definierte Strom soll so groß sein, dass ein definiertes Drehmoment an der Welle 130 abgegeben wird. Um den hierfür nötigen Strom möglichst exakt anhand des gewünschten Drehmoments berechnen zu können, ist die elektronische Motorsteuerung 150 dazu ausgebildet, Temperaturen der Komponenten Leistungsendstufe 140, Wicklung 120 und Motorpermanentmagnet 135 zu berechnen.

Die Temperatur des Motorpermanentmagneten 135 wird dabei mittels eines empirischen Modells berechnet, welches anhand durchgeführter Messungen ermittelt wurde. Ein solches empirisches Modell kann beispielsweise auf dem Anpassen einer Funktion an eine gemessene Temperaturkurve, gemeinhin auch als "Fitting" bezeichnet, beruhen. Derartige empirische Modelle werden beispielsweise bevorzugt für Komponenten verwendet, bei welchen sich die Temperatur meistens nur langsam ändert.

Die Temperaturen der Wicklung 120 und der Leistungsendstufe 140 werden hingegen mittels eines Modells berechnet, welches die jeweilige Leistungsabgabe berücksichtigt. Derartige Modelle werden insbesondere für Komponenten verwendet, deren Temperaturen sich schneller ändern und bei welchen die jeweilige Wärmeabgabe aufgrund eines bekannten durchfließenden Stroms relativ einfach zu berechnen ist.

Um die jeweilige Temperaturüberwachung beim Einschalten des Elektromotors 100 beginnen zu können, werden die jeweiligen Temperaturen der temperaturüberwachten Komponenten 120, 135, 140 initialisiert. Dies erfolgt auf die nachfolgend beschriebene Art und Weise.

Jeder der drei temperaturüberwachten Komponenten 120, 135, 140 ist eine jeweilige Zeitkonstante T zugeordnet, welche in dem jeweiligen zur Temperaturüberwachung verwendeten Modell verwendet wird. Die elektronische Motorsteuerung 150 bestimmt beim Einschalten zunächst, wie viel Zeit zwischen dem letzten Ausschalten und dem Einschalten vergangen ist. Hierzu wird auf eine gespeicherte Ausschaltzeit zurückgegriffen. Sofern die Zeitdauer zwischen Ausschaltzeit und Einschaltzeit, als welche die momentane Zeit angenommen wird, mindestens ein Vielfaches, bevorzugt das Fünffache, der jeweiligen Zeitkonstante beträgt, wird die jeweilige Temperatur einer temperaturüberwachten Komponente 120, 135, 140 auf den vom Temperatursensor 115 gemessenen Wert initialisiert. Sofern die jeweilige Zeitdauer zwischen Ausschaltzeit und Einschaltzeit jedoch kürzer ist als ein Vielfaches von T bzw. die fünffache Zeitkonstante T, werden die Temperaturen der temperaturüberwachten Komponenten 120, 135, 140 folgendermaßen initialisiert:

Die Temperatur des Motorpermanentmagneten 135 zur Einschaltzeit wird folgendermaßen berechnet:

$$T_e = (T_M - T_{PM,a}) * \frac{t}{t+T} + T_{PM,a}$$

Dabei bedeuten:

$T_e$: Temperatur des Motorpermanentmagneten zur Einschaltzeit (berechnet),
$T_M$: Temperatur des Motorgehäuses 110, gemessen durch den Temperatursensor 115,
$T_{PM,a}$: Temperatur des Motorpermanentmagneten 135 zur Ausschaltzeit (gespeichert),
t: Zeitdauer zwischen Ausschaltzeit und Einschaltzeit,
T: Zeitkonstante.

Die Temperatur der beiden Komponenten Motorwicklung 120 und Leistungsendstufe 140 zur Einschaltzeit werden folgendermaßen berechnet:

$$T_e = T_M + dT_a * e^{\frac{-t}{T}}$$

Dabei bedeuten:

$T_e$: Temperatur der Komponente zur Einschaltzeit (berechnet),
$T_M$: Temperatur des Motorgehäuses 110, gemessen durch den Temperatursensor 115,
$dT_a$: Temperaturüberhöhung der temperaturüberwachten Komponente zur Ausschaltzeit (berechnet bzw. gespeichert),
e: Euler'sche Zahl,
t: Zeitdauer zwischen Ausschaltzeit und Einschaltzeit,
T: Zeitkonstante.

Es sei erwähnt, dass der zweite Summand in dieser Formel eine Temperaturüberhöhung zur Einschaltzeit darstellt.

Die beschriebene Vorgehensweise ermöglicht eine vorteilhafte Initialisierung der Temperaturen der temperaturüberwachten Komponenten 120, 135, 140. Dabei kann auf eine Fortführung der Temperaturüberwachung nach dem Ausschalten des Elektromotors 100 und der elektronischen Motorsteuerung 150 verzichtet werden.

Um die nötigen Daten für das Initialisieren der Temperaturüberwachung zur Verfügung zu stellen, speichert die elektronische Motorsteuerung 150 beim Ausschalten die aktuelle Zeit, welche sie von einem nicht dargestellten Fahrzeug-Bussystem erhält, sowie die aktuelle Temperatur des Motorpermanentmagneten 135 und die aktuellen Temperaturüberhöhungen der Wicklung 120 und der Leistungsendstufe 140. Diese Werte können für die Initialisierung beim Einschalten verwendet werden.

Es sei verstanden, dass zusätzlich auch noch weitere Komponenten temperaturüberwacht werden können, welche in Fig. 1 nicht explizit dargestellt sind. Beispielsweise kann es sich hierbei um einen Kondensator der Leistungsendstufe 140 und um eine eingangsseitige EMV-Drossel handeln, welche beispielsweise ebenfalls mittels empirischer Modelle ähnlich zum Motorpermanentmagneten 135 überwacht und initialisiert werden können. Des Weiteren sei verstanden, dass beispielsweise auch ein Gehäuse der elektronischen Motorsteuerung 150 mittels eines Temperatursensors überwacht werden kann. Ein solches Gehäuse kann beispielsweise als Wärmesenke bezeichnet und verwendet werden.

**Patentansprüche**

1.  Verfahren zum Initialisieren einer Temperaturüberwachung für Komponenten eines Elektromotors (100), wobei die Temperaturüberwachung in einer elektronischen Motorsteuerung (150) implementiert ist,
    wobei das Verfahren folgende Schritte aufweist:

    - Ermitteln einer Zeitdauer zwischen einer Ausschaltzeit, welche anzeigend dafür ist, wann der Elektromotor (100) letztmalig ausgeschalten wurde, und einer Einschaltzeit, welche anzeigend dafür ist, wann der Elektromotor (100) wieder eingeschaltet wird,
    - Ermitteln jeweiliger Temperaturen von temperaturkontrollierten Komponenten (110) zur Einschaltzeit mittels an den temperaturkontrollierten Komponenten (110) angebrachten Temperatursensoren (115),
    - Ermitteln jeweiliger Temperaturen oder Temperaturüberhöhungen von temperaturüberwachten Komponenten (120, 135, 140) zur Ausschaltzeit mittels gespeicherter Daten,
    - Berechnen jeweiliger Temperaturen der temperaturüberwachten Komponenten (120, 135, 140) zur Einschaltzeit basierend auf deren jeweiliger Temperaturen oder Temperaturüberhöhungen zur Ausschaltzeit, den Temperaturen der temperaturkontrollierten Komponenten (110) zur Einschaltzeit, und/oder der Zeitdauer zwischen Ausschaltzeit und Einschaltzeit, wobei Temperaturen von Komponenten einer zweiten Menge von temperaturüberwachten Komponenten (135) zur Einschaltzeit unter Verwendung eines jeweiligen empirischen Modells berechnet werden, wobei jedes Modell zur Berechnung der Temperatur der jeweiligen temperaturüberwachten Komponente (135) der zweiten Menge folgende Eingangsparameter aufweist:
    - die Zeitdauer zwischen Ausschaltzeit und Einschaltzeit,
    - eine Zeitkonstante,
    - einen Anfangswert, welcher basierend auf zumindest einer Temperatur einer temperaturkontrollierten Komponente (110) zur Einschaltzeit berechnet wird, und

- einen Endwert, welcher basierend auf der Temperatur der temperaturüberwachten Komponente (135) zur Ausschaltzeit berechnet wird,

**dadurch gekennzeichnet, dass** die Ausschaltzeit und die Einschaltzeit aus einem Fahrzeug-Bussystem oder einem internen Zeitgeber der elektronischen Motorsteuerung erhalten werden, wobei die Temperatur der temperaturüberwachten Komponente (135) der zweiten Menge zur Einschaltzeit folgendermaßen berechnet wird:

```
(Anfangswert  -  Endwert)  *  Zeitdauer  /  (Zeitdauer  +
Zeitkonstante) + Endwert.
```

2. Verfahren nach Anspruch 1,

   - wobei Temperaturen von Komponenten einer ersten Menge von temperaturüberwachten Komponenten (120, 140) zur Einschaltzeit als Summe einer Temperatur einer temperaturkontrollierten Komponente und einer berechneten Temperaturüberhöhung zur Einschaltzeit berechnet werden.

3. Verfahren nach Anspruch 2,

   - wobei jede Temperaturüberhöhung zur Einschaltzeit aus einer jeweiligen Temperaturüberhöhung zur Ausschaltzeit berechnet wird, indem die Temperaturüberhöhung zur Ausschaltzeit mit einem Zeitkorrekturfaktor multipliziert wird,
   - wobei der Zeitkorrekturfaktor aus einer Exponentialfunktion berechnet wird, in deren Exponenten ein mit dem Wert -1 multiplizierter Quotient steht,
   - wobei im Zähler des Quotienten die Zeitdauer zwischen Ausschaltzeit und Einschaltzeit steht, und
   - wobei im Nenner des Quotienten eine Zeitkonstante steht.

4. Verfahren nach Anspruch 2 oder 3,

   - wobei jeweilige Temperaturen von Komponenten der ersten Menge von temperaturüberwachten Komponenten (120, 140) von der Temperaturüberwachung basierend auf einem Modell berechnet werden, welches auf berechneten Leistungsverlusten und auf zumindest einer Temperatur einer temperaturkontrollierten Komponente (110) basiert.

5. Verfahren nach einem der Ansprüche 2 bis 4,

   - wobei die erste Menge von temperaturüberwachten Komponenten (120, 140) eine oder mehrere der folgenden Komponenten enthält:
   - Leistungsendstufe (140),
   - Motorwicklung (120).

6. Verfahren nach einem der vorhergehenden Ansprüche,

   - wobei der Anfangswert die Temperatur der temperaturkontrollierten Komponente (110) zur Einschaltzeit ist; und/oder
   - wobei der Endwert die Temperatur der temperaturüberwachten Komponente (135) der zweiten Menge zur Ausschaltzeit ist.

7. Verfahren nach einem der vorhergehenden Ansprüche,

   - wobei jeweilige Temperaturen von Komponenten der zweiten Menge von temperaturüberwachten Komponenten (135) von der Temperaturüberwachung basierend auf dem jeweiligen empirischen Modell berechnet werden, welches für die Berechnung der Temperaturen zur Einschaltzeit verwendet wird.

8. Verfahren nach einem der vorhergehenden Ansprüche,

- wobei die zweite Menge von temperaturüberwachten Komponenten eine oder mehrere der folgenden Komponenten enthält:

- Motorpermanentmagnet (135),
- Kondensator einer Leistungsendstufe,
- eingangsseitige EMV-Drossel.

9. Verfahren nach einem der vorhergehenden Ansprüche,

- wobei Temperaturen der temperaturüberwachten Komponenten (120, 135, 140) mit einer gemessenen Temperatur einer temperaturkontrollierten Komponente (110) initialisiert werden, wenn die Zeitdauer zwischen Ausschaltzeit und Einschaltzeit mindestens ein vorgegebenes Vielfache der Zeitkonstante beträgt.

10. Verfahren nach einem der vorhergehenden Ansprüche,

- wobei es sich bei den temperaturkontrollierten Komponenten um eine Wärmesenke und/oder ein Motorgehäuse (110) handelt, welchen jeweils ein Temperatursensor (115) zugeordnet ist.

11. Steuerungsverfahren für einen Elektromotor (100), welches in einer elektronischen Motorsteuerung (150) ausgeführt wird,

- wobei das Steuerungsverfahren beim Einschalten des Elektromotors (100) ein Verfahren zum Initialisieren nach einem der vorhergehenden Ansprüche ausführt,
- wobei das Steuerungsverfahren nach der Ausführung des Verfahrens zum Initialisieren mittels der Temperaturüberwachung laufend die Temperaturen der temperaturüberwachten Komponenten (120, 135, 140) berechnet, und
- wobei das Steuerungsverfahren vor einem Abschalten des Elektromotors (100) die Ausschaltzeit und/oder Temperaturen oder Temperaturüberhöhungen von temperaturüberwachten Komponenten (120, 135, 140) speichert.

## Claims

1. Method for initializing temperature monitoring for components of an electric motor (100), wherein the temperature monitoring is implemented in an electronic motor control system (150), wherein the method has the following steps of:

- determining a period between a switch-off time, which is indicative of when the electric motor (100) was last switched off, and a switch-on time, which is indicative of when the electric motor (100) is switched on again,
- determining respective temperatures of temperature-controlled components (110) at the switch-on time by means of temperature sensors (115) fitted to the temperature-controlled components (110),
- determining respective temperatures or excessive temperature increases of temperature-monitored components (120, 135, 140) at the switch-off time by means of stored data,
- calculating respective temperatures of the temperature-monitored components (120, 135, 140) at the switch-on time based on their respective temperatures or excessive temperature increases at the switch-off time, the temperatures of the temperature-controlled components (110) at the switch-on time and/or the period between the switch-off time and the switch-on time, wherein temperatures of components in a second set of temperature-monitored components (135) are calculated at the switch-on time using a respective empirical model, wherein each model has the following input parameters for calculating the temperature of the respective temperature-monitored component (135) in the second set:
- the period between the switch-off time and the switch-on time,
- a time constant,
- a starting value which is calculated based on at least one temperature of a temperature-controlled component (110) at the switch-on time, and
- a final value which is calculated based on the temperature of the temperature-monitored component (135) at the switch-off time,

**characterized in that** the switch-off time and the switch-on time are obtained from a vehicle bus system or an internal timer of the electronic motor control system, wherein the temperature of the temperature-monitored component (135) in the second set at the switch-on time is calculated as follows:

$$(\text{starting value} - \text{final value}) * \text{period} / (\text{period} + \text{time constant}) + \text{final value}.$$

**2.** Method according to Claim 1,

- wherein temperatures of components in a first set of temperature-monitored components (120, 140) at the switch-on time are calculated as the sum of a temperature of a temperature-controlled component and a calculated excessive temperature increase at the switch-on time.

**3.** Method according to Claim 2,

- wherein each excessive temperature increase at the switch-on time is calculated from a respective excessive temperature increase at the switch-off time by multiplying the excessive temperature increase at the switch-off time by a time correction factor,
- wherein the time correction factor is calculated from an exponential function, the exponents of which contain a quotient multiplied by the value -1,
- wherein the numerator of the quotient contains the period between the switch-off time and the switch-on time, and
- wherein the denominator of the quotient contains a time constant.

**4.** Method according to Claim 2 or 3,

- wherein respective temperatures of components in the first set of temperature-monitored components (120, 140) are calculated by the temperature monitoring based on a model which is based on calculated power losses and on at least one temperature of a temperature-controlled component (110).

**5.** Method according to one of Claims 2 to 4,

- wherein the first set of temperature-monitored components (120, 140) contains one or more of the following components:
- power output stage (140),
- motor winding (120).

**6.** Method according to one of the preceding claims,

- wherein the starting value is the temperature of the temperature-controlled component (110) at the switch-on time;
and/or
- wherein the final value is the temperature of the temperature-monitored component (135) in the second set at the switch-off time.

**7.** Method according to one of the preceding claims,

- wherein respective temperatures of components in the second set of temperature-monitored components (135) are calculated by the temperature monitoring based on the respective empirical model which is used to calculate the temperatures at the switch-on time.

**8.** Method according to one of the preceding claims,

- wherein the second set of temperature-monitored components contains one or more of the following components:

- motor permanent magnet (135),
- capacitor of a power output stage,

- input-side EMC inductor.

9. Method according to one of the preceding claims,

- wherein temperatures of the temperature-monitored components (120, 135, 140) are initialized with a measured temperature of a temperature-controlled component (110) if the period between the switch-off time and the switch-on time is at least a predefined multiple of the time constant.

10. Method according to one of the preceding claims,

- wherein the temperature-controlled components are a heat sink and/or a motor housing (110), each of which is assigned a temperature sensor (115).

11. Control method for an electric motor (100), which is carried out in an electronic motor control system (150),

- wherein the control method carries out an initialization method according to one of the preceding claims when the electric motor (100) is switched on,
- wherein, after carrying out the initialization method, the control method continuously calculates the temperatures of the temperature-monitored components (120, 135, 140) by means of the temperature monitoring, and
- wherein, before the electric motor (100) is switched off, the control method stores the switch-off time and/or temperatures or excessive temperature increases of temperature-monitored components (120, 135, 140).

**Revendications**

1. Procédé d'initialisation d'une surveillance de température pour des composants d'un moteur électrique (100), dans lequel la surveillance de température est réalisée dans un régulateur électronique de moteur (150), dans lequel le procédé comprend les étapes consistant à :

- déterminer une période de temps écoulée entre un instant d'arrêt indiquant le moment où le moteur électrique (100) a été arrêté pour la dernière fois et un instant de mise en marche indiquant le moment où le moteur électrique (100) est remis en marche,
- déterminer des températures respectives de composants contrôlés en température (110) à l'instant de mise en marche au moyen de capteurs de température (115) fixés aux composants contrôlés en température (110),
- déterminer des températures ou augmentations de température respectives de composants surveillés en température (120, 135, 140) à l'instant d'arrêt au moyen de données stockées,
- calculer des températures respectives des composants surveillés en température (120, 135, 140) à l'instant de mise en marche sur la base de leurs températures ou augmentations de température respectives à l'instant d'arrêt, des températures des composants contrôlés en température (110) à l'instant de mise en marche, et/ou de la période de temps écoulée entre l'instant d'arrêt et l'instant de mise en marche, dans lequel des températures de composants d'un deuxième ensemble de composants surveillés en température (135) sont calculées à l'instant de mise en marche par utilisation d'un modèle empirique respectif, dans lequel chaque modèle possède les paramètres d'entrée suivants pour le calcul de la température du composant surveillé en température (135) respectif du deuxième ensemble :
- la période de temps écoulée entre l'instant d'arrêt et l'instant de mise en marche,
- une constante de temps,
- une valeur initiale qui est calculée sur la base d'au moins une température d'un composant contrôlé en température (110) à l'instant de mise en marche, et
- une valeur finale qui est calculée sur la base de la température du composant surveillé en température (135) à l'instant d'arrêt,

**caractérisé en ce que** l'instant d'arrêt et l'instant de mise en marche sont obtenus à partir d'un système de bus de véhicule ou d'une minuterie interne du régulateur électronique de moteur, dans lequel la température du composant surveillé en température (135) du deuxième ensemble à l'instant de mise en marche est calculée comme suit :

```
(Valeur initiale - Valeur finale) * Période de temps /
(Période de temps + Constante de temps) + Valeur finale.
```

**2.** Procédé selon la revendication 1,

- dans lequel des températures de composants d'un premier ensemble de composants surveillés en température (120, 140) à l'instant de mise en marche sont calculées comme étant la somme de la température d'un composant contrôlé en température et d'une augmentation de température calculée à l'instant de mise en marche.

**3.** Procédé selon la revendication 2,

- dans lequel chaque augmentation de température à l'instant de mise en marche est calculée à partir d'une augmentation de température respective à l'instant d'arrêt en multipliant l'augmentation de température à l'instant d'arrêt par un coefficient de correction temporelle,
- dans lequel le facteur de correction temporelle est calculé à partir d'une fonction exponentielle dont les exposants contiennent un quotient multiplié par la valeur -1,
- dans lequel le numérateur du quotient contient la période de temps écoulée entre l'instant d'arrêt et l'instant de mise en marche, et
- dans lequel le dénominateur du quotient contient une constante de temps.

**4.** Procédé selon la revendication 2 ou 3,

- dans lequel des températures respectives de composants du premier ensemble de composants surveillés en température (120, 140) sont calculées par la surveillance de température sur la base d'un modèle qui est basé sur des pertes de puissance calculées et sur au moins une température d'un composant contrôlé en température (110) .

**5.** Procédé selon l'une des revendications 2 à 4,

- dans lequel le premier ensemble de composants surveillés en température (120, 140) comprend un ou plusieurs des composants suivants :
- un étage de sortie de puissance (140),
- un enroulement de moteur (120).

**6.** Procédé selon l'une des revendications précédentes,

- dans lequel la valeur initiale est la température du composant contrôlé en température (110) à l'instant de mise en marche ;
et/ou
- dans lequel la valeur finale est la température du composant surveillé en température (135) du deuxième ensemble à l'instant d'arrêt.

**7.** Procédé selon l'une des revendications précédentes,

- dans lequel des températures respectives de composants du deuxième ensemble de composants surveillés en température (135) sont calculées par la surveillance de température sur la base du modèle empirique respectif utilisé pour calculer les températures à l'instant de mise en marche.

**8.** Procédé selon l'une des revendications précédentes,

- dans lequel le deuxième ensemble de composants surveillés en température comprend un ou plusieurs des composants suivants :

  - un moteur à aimant permanent (135),
  - un condensateur d'un étage de sortie de puissance,
  - une inductance CEM côté entrée.

**9.** Procédé selon l'une des revendications précédentes,

- dans lequel des températures des composants surveillés en température (120, 135, 140) sont initialisées au moyen d'une température mesurée d'un composant contrôlé en température (110) lorsque la période de temps écoulée entre l'instant d'arrêt et l'instant de mise en marche est au moins égale à un multiple prédéterminé de la constante de temps.

10. Procédé selon l'une des revendications précédentes,

   - dans lequel les composants contrôlés en température sont un dissipateur thermique et/ou un carter de moteur (110), auxquels est associé un capteur de température (115) .

11. Procédé de commande d'un moteur électrique (100) qui est mis en oeuvre dans un régulateur électronique de moteur (150),

   - dans lequel le procédé de commande met en oeuvre un procédé d'initialisation selon l'une des revendications précédentes lors de la mise en marche du moteur électrique (100),
   - dans lequel le procédé de commande calcule en continu les températures des composants surveillés en température (120, 135, 140) après la mise en oeuvre du procédé d'initialisation au moyen de la surveillance de température, et
   - dans lequel le procédé de commande stocke l'instant d'arrêt et/ou des températures ou des augmentations de température de composants surveillés en température (120, 135, 140) avant un instant d'arrêt du moteur électrique (100) .

**Fig. 1**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 1286456 A1
- JP 2001328551 A